# EUROPÄISCHE PATENTSCHRIFT

(11) **EP 3 639 905 B1**
(45) Veröffentlichungstag und Bekanntmachung des Hinweises auf die Patenterteilung: **22.06.2022**
(21) Anmeldenummer: 19208693.2
(22) Anmeldetag: 18.04.2015
(51) Int. Cl.: B01D 35/153, B01D 35/16, B01D 36/00, B01D 29/21

(54) **FILTERVORRICHTUNG**
FILTER DEVICE
DISPOSITIF DE FILTRATION

(30) Priorität: 17.05.2014 DE 102014007302
(43) Veröffentlichungstag der Anmeldung: 22.04.2020
(62) Teilanmeldung aus: 15719144.6
(73) Patentinhaber: Hydac Fluidcarecenter GmbH, 66280 Sulzbach/Saar (DE)
(72) Erfinder: Eberle, Richard, 66399 Ormesheim (DE); Kreibig, Micha, 66663 Merzig-Brotdorf (DE)
(74) Vertreter: Bartels und Partner, Patentanwälte

(56) Entgegenhaltungen:
- WO-A1-2014/191476
- DE-A1- 10 124 463
- DE-A1- 19 538 883
- DE-A1- 19 716 085
- DE-U1-202006 017 614
- US-A- 2 627 350
- US-A- 2 873 029
- US-A- 4 133 763

## Beschreibung

Die Erfindung betrifft ein zur Benutzung bei einer Filtervorrichtung vorgesehenes Filterelement mit den Merkmalen im Oberbegriff des Anspruchs 1.

Die DE 195 38 883 A1 offenbart ein Filterelement zur Benutzung bei einer Filtervorrichtung, das ein beim Filtriervorgang vom zu reinigenden Fluid durchströmbares Filtermedium aufweist, das einen inneren Filterhohlraum umgibt, und mit einer bei der Funktionsposition des Filterelements einem oberen Ende eines Filtergehäuses der Filtervorrichtung zuordenbaren Endkappe, wobei diese Endkappe einen sich axial in den inneren Filterhohlraum erstreckenden Rohrstutzen aufweist, wobei innerhalb desselben eine Dichtpackung vorgesehen ist, wobei die Endkappe derart eingerichtet ist, dass, wenn das Filterelement in die Filtervorrichtung eingesetzt ist, die Dichtpackung zusammen mit einem sie durchgreifenden Ausgleichsrohr des Filtergehäuses den inneren Filterhohlraum gegenüber dem umgebenden Gehäuseinnenraum der Filtervorrichtung abdichtet, wobei eine Sperreinrichtung vorgesehen ist, die einen Ringkörper aufweist, der an einer unteren Endkappe des Filterelements vorspringt und an dieser eine Austrittsöffnung aus dem eine Reinseite bildenden Filterhohlraum umgibt, wobei der Ringkörper bei in die Filtervorrichtung eingesetztem Filterelement abdichtend in einen Ringspalt eingreift, der an einer Elementaufnahme des Gehäuses gebildet ist, und wobei zur Abdichtung zwischen dem Ringkörper und dem Ringspalt zumindest ein an Außenseite und/oder Innenseite des Ringkörpers vorgesehenes Dichtelement vorgesehen ist.

Filtervorrichtungen der oben genannten Art sind Stand der Technik. Sie werden beispielsweise bei Kraftstoffsystemen für Verbrennungsmotoren eingesetzt, um empfindliche Komponenten, insbesondere Einspritzsysteme, gegen Beeinträchtigungen durch im Kraftstoff mitgeführte Verunreinigungen, wie Schmutzpartikel oder auch am Filterelement abzuscheidende Wasseranteile, zu schützen. An die sichere Funktion solcher Filtervorrichtungen sind hohe Anforderungen zu stellen, weil ein Betrieb betreffender Systeme mit nicht funktionsbereiter Filtervorrichtung wegen dadurch bedingter Funktionsausfälle oder Beschädigungen von Einspritzsystemen hohe wirtschaftliche Verluste verursachen würde.

Die DE 197 16 085 A1, die WO 2014/191476 A1, DE 20 2006 017 614 U1, die US 2 873 029, die US 4 133 763, die DE 101 24 463 A1 und die US 2 627 350 beschreiben weitere Filterelemente.

Der Erfindung liegt die Aufgabe zugrunde, ein Filterelement bereitzustellen, das bei einem Einsatz in einer Filtervorrichtung ein besonders sicheres Betriebsverhalten der Filtervorrichtung zur Verfügung stellt.

Erfindungsgemäß ist diese Aufgabe durch ein Filterelement gelöst, das die Merkmale des Patentanspruchs 1 in seiner Gesamtheit aufweist.

Gemäß dem kennzeichnenden Teil des Patentanspruchs 1 ist das erfindungsgemäße Filterelement dadurch gekennzeichnet, dass die untere Endkappe ein die Austrittsöffnung umgebendes Rohrstück aufweist, das sich axial nach oben erstreckt und eine Anlagefläche für ein unteres Ende eines fluiddurchlässigen Stützrohres des Filterelements bildet, und dass bei in die Filtervorrichtung eingesetztem Filterelement ein Dichtelement am Rohrstück eine Abdichtung der Austrittsöffnung gegenüber der Außenseite eines Rohrkörpers der Filtervorrichtung bildet.

Lediglich zur Erläuterung der Funktion des erfindungsgemäßen Filterelements dient eine Filtervorrichtung, die nicht Gegenstand der Erfindung, insbesondere eines Patentanspruches, ist.

Im Filtergehäuse der Filtervorrichtung ist ein Ausgleichsrohr vorgesehen, das sich von seinem mit dem Tankrücklaufanschluss verbundenen unteren Ende bis zu einer für den Filtrationsbetrieb vorgesehenen maximalen Füllstandshöhe erstreckt, wobei das Rohr an seinem oberen Ende offen ist und an einer Stelle, die sich in einem Abstand vom oberen und unteren Ende des Rohres befindet, ein inneres Steuerteil aufweist, in dem sich eine Durchgangsöffnung befindet, die eine Drosselstelle bildet. Bei entsprechender Wahl der Größe der im Steuerteil befindlichen Durchgangsöffnung, insbesondere in Form einer Durchgangsbohrung ist über das Ausgleichsrohr eine druckentlastende Entlüftung des Filtergehäuses zum Tankrücklauf hin gebildet, während gleichzeitig aufgrund der Drosselwirkung im Normalbetrieb der gewünschte Förderdruck erhalten bleibt. Somit ist eine Sicherheitseinrichtung realisiert, die sowohl Betriebsstörungen aufgrund fehlerhafter Gehäuseentlüftung vermeidet als auch über die Drosselstelle eine Druckentlastung des Filtergehäuses bilden kann.

Das Steuerteil, das eine Art Verschlussteil ausbildet, kann im mittleren Längenbereich oder in der Nähe dieses Längenbereichs des Rohres angeordnet sein.

Wenn das Filterelement über mindestens eine Endkappe an einer Elementaufnahme des Filtergehäuses festgelegt ist, kann das Ausgleichsrohr am Filtergehäuse innerhalb der Elementaufnahme angebracht sein und sich koaxial zur Längsachse des in Funktionsposition befindlichen Filterelements durch dessen an der Filteraufnahme festgelegte Endkappe und den Filterhohlraum hindurch erstrecken. Eine derartige, zur Längsachse konzentrische Anordnung des Ausgleichsrohres führt zu einer besonders kompakten Bauweise der Filtervorrichtung.

Das Rohr kann im Außendurchmesser und im Innendurchmesser gestuft ausgebildet sein, wobei das Rohr mit dem Längenabschnitt des größeren Außendurchmessers und des größeren Innendurchmessers an die Elementaufnahme angrenzt, und das die Durchgangsbohrung aufweisende Steuerteil bildet den Übergang zwischen dem größeren Innendurchmesser und dem kleineren Innendurchmesser des Rohres.

Durch den Rohrstutzen der oberen Endkappe kann sich bei der Funktionsposition des Filterelements der obere Endbereich des Rohres hindurch erstrecken.

Hierbei kann die Anordnung so getroffen sein, dass die Dichtpackung bei der Funktionsposition vom Rohr durchgriffen ist und mit dem Rohr eine Dichtverbindung bildet, die den inneren Filterhohlraum gegenüber der Gehäuseinnenseite abdichtet. Bei einer Filtervorrichtung, bei der das Filterelement beim Filtrationsvorgang von seiner Außenseite zu dem die Reinseite bildenden Filterhohlraum hin durchströmt wird, kommt so beim Einsetzen des Filterelementes in die Funktionsposition selbsttätig die Abdichtung zwischen der Rohseite an der Gehäuseinnenseite und der Reinseite zustande. Dadurch, dass im Filtergehäuse ein von der Rohseite zum Tankrücklaufanschluss führender Fluidweg sowie eine Sperreinrichtung vorhanden ist, die bei in das Gehäuse eingesetztem Filterelement diesen Fluidweg sperrt und bei entferntem Filterelement diesen Fluidweg freigibt, ist als zusätzliche Sicherheitseinrichtung in der Förderleitung, die von einem betreffenden Tank über eine Förderpumpe sowie das Filtergehäuse zum Abnehmer (wie Einspritzsystem) führt, ein Bypass gebildet, der in Abhängigkeit vom Vorhandensein eines in das Filtergehäuse eingesetzten Filterelements mittels der Sperreinrichtung geschlossen ist, automatisch jedoch bei Fehlen des Filterelements geöffnet ist. Das Fehlen eines Filterelements und das dadurch bewirkte Öffnen des Bypasses über den Tankrücklaufanschluss zum drucklosen Tank führt zu einer Unterbrechung des Förderstromes zum Abnehmer, so dass die Gefahr vermieden ist, dass ein Betrieb bei versehentlich nicht in das Filtergehäuse eingesetztem Filterelement stattfinden kann. Der Ringkörper greift bei eingesetztem Filterelement abdichtend in einen Ringspalt ein, der an der Elementaufnahme des Gehäuses gebildet und mit dem Tankrücklaufanschluss in Fluidverbindung ist.

Als weitere Sicherheitseinrichtung kann im Filtergehäuse zwischen Fluidausgang und der Reinseite des Filterelements eine Barriereeinrichtung gebildet sein, die einen Zustrom von Fluid zum Fluidausgang nur bei einem vorgegebenen Füllstand im Gehäuse durch Überströmen der Barriereeinrichtung ermöglicht. Dadurch ist die Gefahr verhindert, dass bei Fehlen eines Filterelements und trotz des hierbei geöffneten Bypasses Kraftstoff, der über den Fluideingang dem Gehäuse zugefördert wird, zum Fluidausgang gelangen kann, weil die Barriereeinrichtung nur bei einer vorgegebenen Höhe des Füllstandes überströmbar ist, ein solcher Füllstand jedoch bei geöffnetem Bypass nicht zustande kommen kann, selbst wenn auch weiterhin Kraftstoff zugefördert würde.

Die Barriereeinrichtung kann einen Rohrkörper aufweisen, der von der Elementaufnahme in den inneren Filterhohlraum des eingesetzten Filterelements bis zur Höhe des vorgegebenen Füllstandes vorspringt und innerhalb der Elementaufnahme mit dem Fluidausgang in Verbindung ist.

Nachstehend ist die Erfindung anhand eines in der Zeichnung dargestellten Ausführungsbeispiels im Einzelnen erläutert. Es zeigen:
- Fig. 1: eine aufgeschnitten und teils abgebrochen gezeichnete perspektivische Schrägansicht einer Filtervorrichtung mit in das Filtergehäuse eingesetztem erfindungsgemäßem Filterelement und
- Fig. 2: eine ebenfalls aufgeschnitten und teils abgebrochen gezeichnete perspektivische Schrägansicht der Filtervorrichtung ohne im Filtergehäuse befindlichem Filterelement.

Nachstehend ist die Erfindung am Beispiel eines Kraftstofffilters erläutert, der in einem (nicht gezeigten) Kraftstoffversorgungssystem eines Verbrennungsmotors zur Reinigung von Dieselöl vorgesehen ist. Die Erfindung eignet sich gleichermaßen für andere Fluide und auch andere Verwendungen.

Die Filtervorrichtung dient lediglich der Erläuterung des Hintergrundes der Erfindung und ist nicht Gegenstand der Erfindung, insbesondere eines Patentanspruches.

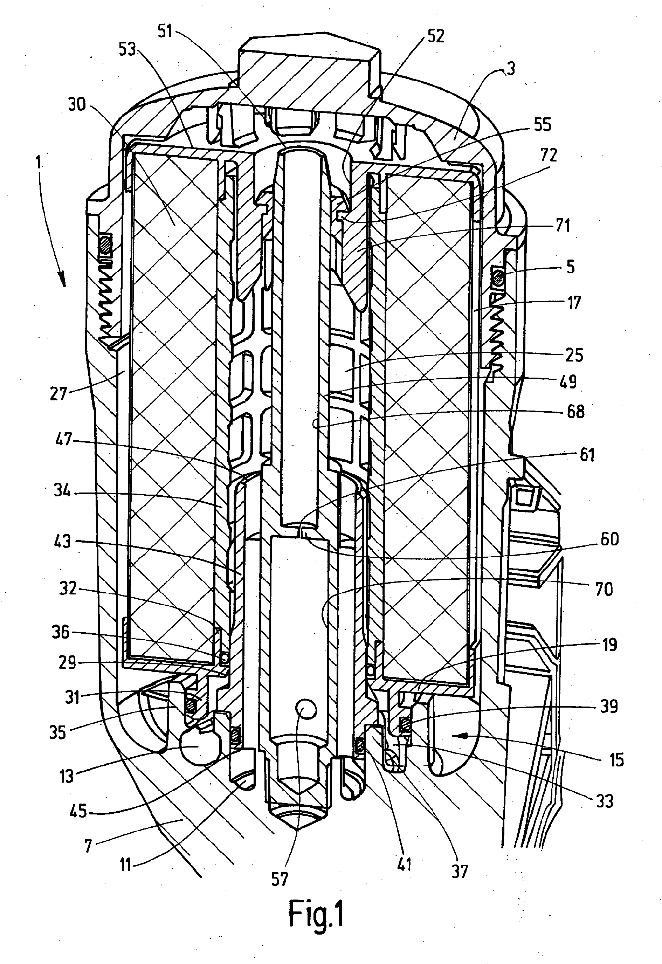

Die Vorrichtung weist ein Filtergehäuse 1 in Form eines hohlzylinderförmigen Topfes auf, der an seinem oberen, offenen Ende durch einen abnehmbaren Schraubdeckel 3 unter Mitwirkung eines Dichtelements 5 dicht verschließbar ist. Das Gehäuse 1 weist ein Bodenteil 7 auf, das bis auf Gehäuseanschlüsse, die in den Figuren nicht sichtbar sind, geschlossen ist. Bei diesen Gehäuseanschlüssen handelt es sich um einen Ausgangsanschluss für die Abgabe abgereinigten Dieselöls und einen Tankrücklaufanschluss. Der Ausgangsanschluss ist mit einer Ausgangskammer 11 in Verbindung, und der Tankrücklaufanschluss ist mit einer Rücklaufkammer 13 in Fluidverbindung, die im Bodenteil 7 in demjenigen Bereich gebildet sind, der eine Elementaufnahme 15 bildet, in der ein in das Gehäuse 1 eingesetztes Filterelement 17, das in Fig.1 im eingebauten Zustand dargestellt ist, mit seiner unteren Endkappe 19 festlegbar ist.

Im Betrieb wird innerhalb des nicht dargestellten Kraftstoffversorgungssystems Dieselöl aus einem Tank mittels einer Förderpumpe zum Fluideingang des Filtergehäuses 1 gefördert. Der in der Zeichnung nicht sichtbare Fluideingang befindet sich am Gehäuse 1 oberhalb des Bodenteils 7 etwa in halber Höhe des Filtergehäuses. Der einströmende Kraftstoff durchströmt das eingesetzte Filterelement 17 von der äußeren Rohseite 27 her von außen nach innen zu einem inneren Filterhohlraum 25, der beim Filtrationsvorgang die Reinseite bildet. Wie der Fig.1 entnehmbar ist, weist die in der Figur untere Endkappe 19 des Filterelements 17 einen zur zentralen Öffnung 29 des inneren Filterhohlraums 25 koaxialen, axial vorspringenden Ringkörper 31 auf, der die Öffnung 29 in einem radialen Abstand umgibt und in Zusammenwirkung mit der Elementaufnahme 15 eine Sperreinrichtung bildet. Zu diesem Zweck bildet die Elementaufnahme 15 einen den Eingangsteil der Rücklaufkammer 13 bildenden Ringspalt 33, der außenseitig durch einen von der Elementaufnahme 15 vorstehenden Rohrstutzen 35 und innenseitig durch eine etwas weniger weit vorstehende Ringrippe 37 begrenzt ist. Ein an dem Ringkörper 31 radial außen liegendes Dichtelement 39 bildet eine Abdichtung an der Außenseite des Ringspaltes 33, während ein Dichtelement 41 eine Abdichtung an der Innenseite der Ringrippe 37 bildet.

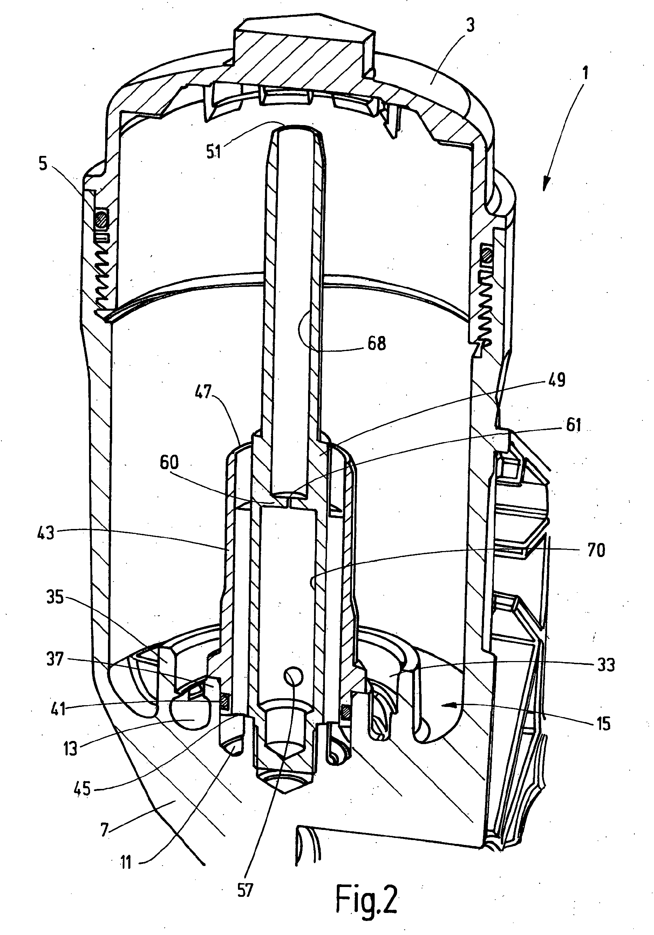

Die weitere Ausgestaltung der Elementaufnahme 15 ist aus Fig.2 deutlich ersichtlich. Ein als Barriereeinrichtung dienender Rohrkörper 43 erstreckt sich von der Elementaufnahme 15 konzentrisch zur Längsachse der Vorrichtung durch den Durchgang 29 der Endkappe 19 axial in den inneren Filterhohlraum 25 des in das Gehäuse 1 eingesetzten Filterelements 17 hinein. Die Endkappe 19 weist ein den Durchgang 29 umgebendes Rohrstück 32 auf, das sich axial nach oben erstreckt und eine Anlagefläche für das untere Ende des fluiddurchlässigen Stützrohres 34 des Filterelements 17 bildet. Ein Dichtelement 36 bildet am Rohrstück 32 eine Abdichtung des Durchgangs 29 gegenüber der Außenseite des Rohrkörpers 43. Dieser ist, wie aus Fig.1 ersichtlich ist, zu der Ausgangskammer 11 offen. Mit dem oberen, offenen Rohrende 47 mündet der Rohrkörper 43 auf etwa halber Höhe des Filtergehäuses 1 im inneren Filterhohlraum 25 des eingesetzten Filterelements 17, also der Reinseite beim Filtrationsvorgang. Bei normalem Füllstand beim Filtrationsbetrieb mit eingesetztem Filterelement 17 überströmt daher der das Filterelement 17 von außen nach innen durchströmende Kraftstoff das Rohrende 47 des Rohrkörpers 43, so dass abgereinigter Kraftstoff in die Ausgangskammer 11 einströmt und über den (nicht gezeigten) Fluidausgangsanschluss aus dem Filtergehäuse 1 austritt.

Wenn sich, wie in Fig.2 gezeigt, kein Filterelement 17 im Gehäuse 1 befindet und somit im Ringspalt 33 keine Sperreinrichtung wirksam ist, weil der Ringspalt 33 zur Rücklaufkammer 13 und damit zum Tankrücklauf offen ist, kann sich im Gehäuse 1 kein Füllstand an Kraftstoff bilden, der das Rohrende 47 des als Barriereeinrichtung dienenden Rohrkörpers 43 überströmen könnte. Würde die Vorrichtung ohne eingesetztes Filterelement 17 in Betrieb gesetzt werden, würde zugeförderter Kraftstoff den Rohrstutzen 35 überströmend über den Ringspalt 33 und die Rücklaufkammer 13 zum Tank abströmen, so dass kein ungefilterter Kraftstoff über die Ausgangskammer 11 zum Fluidausgangsanschluss gelangen könnte. Da der Ringspalt 33 durch den vom Bodenteil 7 vorstehenden Rohrstutzen 35 begrenzt ist, der überströmt werden muss, verbleibt in diesem Falle ein Restsumpf innerhalb eines am Boden des Gehäuses 1 gebildeten Sammelraumes, in dem gegebenenfalls bei einer Entnahme des Filterelements 17 von dessen Außenseite abfallende Verschmutzungen zurückbleiben und nicht über den Rücklauf zum Tank zurück gelangen.

Innerhalb des Rohrkörpers 43 erstreckt sich von der Elementaufnahme 15 zur Längsachse konzentrisch ein Ausgleichsrohr 49 durch den inneren Filterhohlraum 25 des eingesetzten Filterelements 17 hindurch so weit nach oben, dass sein oberes Ende 51 auf der Höhe des für den Filtrationsbetrieb vorgesehenen maximalen Füllstandes liegt. Dabei durchgreift das Ausgleichsrohr 49 eine an der oberen Endkappe 53 des eingesetzten Filterelements befindliche Öffnung 52. Diese ist durch die Innenseite eines Rohrstutzens 71 gebildet, der sich von der oberen Endkappe 53 des Filterelements 17 axial nach unten in den Filterhohlraum 25 erstreckt. Der Rohrstutzen 71 weist innenseitig eine radial nach innen vorstehende Ringrippe 72 auf, mittels deren eine elastomere Dichtpackung 55 festgelegt ist.

Bei in der Funktionsposition befindlichem Filterelement 17 durchgreift das Ausgleichsrohr 49 mit seinem zum Ende 51 hin verjüngten oberen Endbereich die Dichtpackung 55 und bildet so die Abdichtung zwischen dem oberen Ende des Filterhohlraumes 25 und der Gehäuseinnenseite, also die Abdichtung zwischen der Reinseite und der an der Außenseite des Filterelements 17 befindlichen Rohseite 27.

Während das Ausgleichsrohr 49 an seinem oberen Ende 51 offen ist, ist das untere Ende des Ausgleichsrohres 49 bis auf einen zur Längsachse quer verlaufenden Kanal 57 geschlossen, der das Innere des Ausgleichsrohres 49 mit der Rücklaufkammer 13 verbindet. Wie aus den Figuren ersichtlich, ist das Ausgleichsrohr 49 sowohl im Außendurchmesser als im Innendurchmesser gestuft, wobei der an die Elementaufnahme 15 angrenzende untere Bereich 70 einen geringeren Innendurchmesser als der darüberliegende Bereich 78 besitzt und über den Großteil der Länge dieser Bereiche 68, 70 auch der Außendurchmesser des Ausgleichsrohres 49 unterschiedlich ist, d.h. im oberen Teil geringer als im unteren Teil ist. An der Übergangsstelle zwischen dem Bereich 68 kleineren Innendurchmessers und dem Bereich 70 größeren Innendurchmessers befindet sich im Rohrinneren ein Art Steuer- oder Verschlussteil 60, durch das sich eine Durchgangsöffnung, insbesondere in Form einer Durchgangsbohrung 61 erstreckt. Das Steuerteil 60 mit der Durchgangsbohrung 61 befindet sich im mittleren Längenbereich des Ausgleichsrohres 49, genauer gesagt etwas unterhalb der Mitte der Rohrlänge. Die Durchgangsbohrung 61 ist so dimensioniert, dass sie eine Drosselstelle bildet, über die der Innenraum des Filtergehäuses 1, der beim Filtriervorgang die Rohseite 27 bildet, mit dem Tankrücklaufanschluss in Verbindung ist. Die Größe der Durchgangsbohrung 61 ist so gewählt, dass über das Ausgleichsrohr 49 zwar eine druckentlastende, selbsttätig wirkende Entlüftungseinrichtung für das Filtergehäuse 1 gebildet ist, dass durch die Drosselwirkung der Durchgangsbohrung 61 jedoch ein gewünschter, vorgegebener Förderdruck beim normalen Filtrationsbetrieb beibehalten ist. Dadurch dass die Drosselstelle 61 in etwa mittig innerhalb des Ausgleichsrohres 49 angeordnet ist, sind die Strömungsverhältnisse aufgrund einer optimierten Drosselwirkung verbessert.

## Patentansprüche

1. Filterelement zur Benutzung bei einer Filtervorrichtung, das ein beim Filtriervorgang vom zu reinigenden Fluid durchströmbares Filtermedium (30) aufweist, das einen inneren Filterhohlraum (25) umgibt, und mit einer bei der Funktionsposition des Filterelements einem oberen Ende eines Filtergehäuses (1) der Filtervorrichtung zuordenbaren Endkappe (53), wobei diese Endkappe (53) einen sich axial in den inneren Filterhohlraum (25) erstreckenden Rohrstutzen (71) aufweist, wobei innerhalb desselben eine Dichtpackung (55) vorgesehen ist, wobei die Endkappe (53) derart eingerichtet ist, dass, wenn das Filterelement in die Filtervorrichtung eingesetzt ist, die Dichtpackung (55) zusammen mit einem sie durchgreifenden Ausgleichsrohr (49) des Filtergehäuses (1) den inneren Filterhohlraum (25) gegenüber dem umgebenden Gehäuseinnenraum der Filtervorrichtung abdichtet, wobei eine Sperreinrichtung (31) vorgesehen ist, die einen Ringkörper (31) aufweist, der an einer unteren Endkappe (19) des Filterelements vorspringt und an dieser eine Austrittsöffnung (29) aus dem eine Reinseite bildenden Filterhohlraum (25) umgibt, wobei der Ringkörper (31) bei in die Filtervorrichtung eingesetztem Filterelement abdichtend in einen Ringspalt (33) der Filtervorrichtung eingreift, der an einer Elementaufnahme (15) des Gehäuses (1) gebildet ist, und wobei zur Abdichtung zwischen dem Ringkörper (31) und dem Ringspalt (33) zumindest ein an Außenseite und/oder Innenseite des Ringkörpers (31) vorgesehenes Dichtelement (39) vorgesehen ist, **dadurch gekennzeichnet, dass** die untere Endkappe (19) ein die Austrittsöffnung (29) umgebendes Rohrstück (32) aufweist, das sich axial nach oben erstreckt und eine Anlagefläche für ein unteres Ende eines fluiddurchlässigen Stützrohres (34) des Filterelements bildet, und dass bei in die Filtervorrichtung eingesetztem Filterelement ein Dichtelement (36) am Rohrstück (32) eine Abdichtung der Austrittsöffnung (29) gegenüber der Außenseite eines Rohrkörpers (43) der Filtervorrichtung bildet.

## Claims

1. Filter element for use in a filter device, comprising a filter medium (30) through which the fluid to be cleaned flows during the filtering process, said filter medium surrounding an inner filter cavity (25), and having an end cap (53) associated with an upper end of a filter housing (1) of the filter device when the filter element is in the functional position, wherein this end cap (53) comprises a pipe socket (71) extending axially into the inner filter cavity (25), wherein a packing (55) is provided inside said pipe socket, wherein the end cap (53) is adapted in such a manner that, when the filter element is inserted into the filter device, the packing (55), together with a balance pipe (49) of the filter housing (1) passing through it, seals the inner filter cavity (25) with respect to the surrounding housing interior of the filter device, wherein a blocking device (31) is provided, which comprises an annular body (31) that protrudes at a lower end cap (19) of the filter element and at said end cap surrounds the outlet opening (29) out of the filter cavity (25) which forms a clean side, wherein the annular body (31) engages sealingly in an annular gap (33) of the filter device when the filter element is inserted into the filter device, said annular gap being formed on an element holder (15) of the housing (1), and wherein at least one sealing element (39), provided on the outside and/or inside of the annular body (31), is provided for sealing between the annular body (31) and the annular gap (33), **characterised in that** the lower end cap (19) comprises a pipe section (32) which surrounds the outlet opening (29) and extends axially upwards to form a contact surface for a lower end of a fluid-permeable supporting tube (34) of the filter element, and **in that**, when the filter element is inserted into the filter device, a sealing element (36) on the pipe section (32) forms a seal of the outlet opening (29) with respect to the outside of a pipe body (43) of the filter device.

## Revendications

1. Elément de filtre à utiliser dans un dispositif de filtration, qui a un milieu (30) filtrant pouvant, lors de la filtration, être traversé par du fluide à épurer et entourant une cavité (25) intérieure de filtre, et comprenant une coiffe (53) d'extrémité pouvant, en la position fonctionnelle de l'élément de filtre, être associée à une extrémité supérieure d'une enveloppe (1) de filtre du dispositif de filtration, dans lequel cette coiffe (53) d'extrémité a, s'étendant axialement dans la cavité (25) intérieure de filtre, une tubulure (71), dans lequel à l'intérieur de celle-ci est prévue une garniture (55) d'étanchéité, dans lequel la coiffe (53) d'extrémité est telle que, lorsque l'élément de filtre est inséré dans le dispositif de filtration, la garniture (55) d'étanchéité ensemble avec un tube (49) de compensation, la traversant, de l'enveloppe (1) du filtre rend la cavité (25) intérieure du filtre étanche par rapport à l'espace intérieur environnant de l'enveloppe du dispositif de filtration, dans lequel il est prévu un dispositif (31) d'arrêt, qui a une pièce (31) annulaire, qui fait saillie d'une coiffe (19) d'extrémité inférieure de l'élément de filtre et qui entoure sur celle-ci une ouverture (29) de sortie de la cavité (25) de filtre formant un côté propre, dans lequel la pièce (31) annulaire pénètre, lorsque l'élément de filtre est inséré dans le dispositif de filtration, d'une manière étanche dans un intervalle (33) annulaire du dispositif de filtration, intervalle qui est formé sur un logement (15) d'élément de l'enveloppe (1), et dans lequel, pour l'étanchéité entre la pièce (31) annulaire et l'intervalle (33) annulaire, il est prévu au moins un élément (39) d'étanchéité prévu sur une face extérieure et/ou une face intérieure de la pièce (31) annulaire, **caractérisé en ce que** la coiffe (19) d'extrémité inférieure a une pièce (32) tubulaire, qui entoure l'ouverture (29) de sortie, qui s'étend axialement vers le haut et qui forme une surface de contact d'une extrémité inférieure d'un tube (34) d'appui, perméable au fluide, de l'élément de filtre, et **en ce que**, lorsque l'élément de filtre est inséré dans le dispositif de filtration, un élément (36) d'étanchéité sur la pièce (32) tubulaire forme une étanchéité de l'ouverture (29) de sortie, par rapport à la face extérieure d'une pièce (43) tubulaire du dispositif de filtration.
